Europäisches Patentamt

European Patent Office

Office européen des brevets

(11) Veröffentlichungsnummer: **0 087 765**
A2

(12) **EUROPÄISCHE PATENTANMELDUNG**

(21) Anmeldenummer: 83101816.3

(22) Anmeldetag: 24.02.83

(51) Int. Cl.³: **G 11 B 23/02**

(30) Priorität: 01.03.82 DE 3207273
01.04.82 DE 3212183

(43) Veröffentlichungstag der Anmeldung:
07.09.83 Patentblatt 83/36

(84) Benannte Vertragsstaaten:
AT BE CH DE FR GB IT LI LU NL SE

(71) Anmelder: Alsdorf, Franz
Rümannstrasse 57
D-8000 München 40(DE)

(72) Erfinder: Alsdorf, Franz
Rümannstrasse 57
D-8000 München 40(DE)

(74) Vertreter: Füchsle, Klaus, Dipl.-Ing. et al,
Hoffmann . Eitle & Partner Patentanwälte
Arabellastrasse 4
D-8000 München 81(DE)

(54) Behälter zum Aufnehmen mindestens einer Cassette, insbesondere Videocassette.

(57) Ein Behälter zum Aufnehmen mindestens einer Cassette, insbesondere einer Videocassette weist an ihrer Außenseite Schieber (27a, 27b) mit darunter befindlichen Einlegenischen (38) zur Aufnahme von Beschriftungskarten auf. An der Innenseite des Behälters befinden sich Ausnehmungen (92) zum Einschieben von Einsätzen, die den Innenraum des Behälters hinsichtlich seiner Größe derart verändern, daß vom Behälter unterschiedlich große Cassetten aufgenommen werden können.

FIG.6

Croydon Printing Company Ltd.

Behälter zum Aufnehmen mindestens einer Cassette, insbesondere Videocassette

Die Erfindung bezieht sich auf einen Behälter zum Aufnehmen mindestens einer Cassette, insbesondere Videocassette, mit die Cassette vollständig umgebenden Begrenzungswänden, von denen zumindest eine öffenbar ist, und mit auf der Außenseite zumindest einer dieser Begrenzungswände aufgebrachten Beschriftungsfeldern.

In der Vergangenheit wurden eine ganze Reihe von Behältern zur Aufnahme von Magnetbandcassetten und auch Videocassetten entwickelt.

So ist ein Behälter der eingangs genannten Art aus der DE-GM 78 02 126 bekannt. An den Außenflächen des Behälters sind in Vertiefungen löschbare Beschriftungstafeln fest angebracht. Auf diesen Beschriftungstafeln können Informationen niedergeschrieben werden und dann mittels eines Löschschiebers wieder gelöscht werden. Dieses Beschriftungssystem ist zwar an verschiedene Beschriftungsmoden anpaßbar. Allerdings ist dieses System einerseits relativ aufwendig. Andererseits besteht die Gefahr, daß die Beschriftung unbeabsichtigt gelöscht wird.

Man hat auch bereits einen Behälter zum Archivieren von Videocassetten geschaffen, wobei der Behälter in Buchform gestaltet ist. An der Außenseite des Buches sind Klarsichttaschen fest angebracht. In diese Klarsichttaschen sind

Beschriftungskarten einschiebbar. Dieses Beschriftungssystem ist jedoch zu unflexibel und bei einem weitergehenden Beschriftungsaufwand zu umständlich. Schließlich muß
für jede Cassettengröße eine entsprechend dimensionierte
Behälterform geschaffen werden. Eine derartige Verpackungsform ist aus der DE-OS 30 27 024 bekannt.

Aus der DE-AS 17 97 562 ist eine Beschriftung von Magnetbandspulen bekannt. Dabei wird ein einstückig angeformter
Etikettenhalter verwendet, der auf der Außenseite des
Bandes angebracht ist. Zwischen Lippen wird ein dünner,
beschrifteter Streifen und ein transparenter Deckstreifen
eingesetzt, wobei das Material so flexibel ist, daß es die
Biegung des Bandes mitmacht.

Die DE-AS 27 01 669 beschreibt einen Behälter für Tonbandcassetten. Über die gesamte eine Außenwand des Behälters
ist ein Deckel aufschiebbar, wobei zwischen Deckel und
Seitenfläche ein Etikett eingelegt ist. Der Deckel ist mit
vorspringenden Gleitschienen versehen, so wie die entgegengesetzte Seitenfläche mit Gleitnuten versehen ist, in die
die vorgenannten Gleitrippen einsetzbar sind, um mehrere
Cassetten zu einer Einheit zusammenfassen zu können. Dabei
allerdings wird die Beschriftung als solche abgedeckt, so
daß sie für den Benutzer keine Bedeutung mehr haben kann.

Im Zusammenhang mit dem DE-GM 72 42 598 ist ein Behälter zur
Aufnahme von Tonbandcassetten bekannt geworden. In diesem
Behälter können unverpackte und verpackte Tonbandcassetten
dadurch in ein und demselben Behälter untergebracht werden,
daß an den jeweils gegenüberliegenden Begrenzungswänden
Trennrippen angebracht sind, wobei die Trennrippen benachbarter Begrenzungswände unterschiedlich so beabstandet sind,
daß einmal unverpackte Tonbandcassetten und zum anderen
alternativ verpackte Tonbandcassetten aufgenommen werden
können. Dieses System ist jedoch nur bei einem Behälter verwendbar, welcher mehrere Tonbandcassetten nebeneinander aufnehmen kann. Außerdem ist hier eine Anpaßbarkeit an nur zwei Cassettengrößen unterschiedlicher Dicke möglich.

Die Aufgabe der Erfindung besteht darin, einen hochqualitativen, verbesserten Behälter zur Aufnahme von Cassetten, insbesondere Videocassetten zu schaffen, welcher hinsichtlich seines vielseitigen Einsatzes auf einfache und sichere Weise beschriftbar und an verschiedene Cassettengrößen anpaßbar ist.

Diese Aufgabe wird erfindungsgemäß dadurch gelöst, daß sowohl an der Außenseite, als auch an der Innenseite zumindest einer Begrenzungswand zumindest eine innere bzw. äußere Ausnehmung angeordnet ist, daß in die an der Außenseite vorgesehenen Ausnehmungen ein eine lose eingelegte Beschriftung abdeckender, transparenter Deckel zumindest teilweise lösbarer Deckel anbringbar ist und in die an der Innenseite vorgesehenen Ausnehmungen Einsätze zum Verändern der Innenraumabmessungen des Behälters einschiebbar sind. Dieser Deckel kann als einseitig, vorzugsweise vom freien Rand einzuschiebender Schieber, als schwenkbar angelenkte Tür oder als vollständig lösbare Steckplatte ausgebildet sein.

Durch die Verwendung von derartigen Deckeln wird ein einfaches und sicheres System geschaffen, mit dem eine vielseitig einsetzbare und sichere Beschriftung sowie eine Anpaßbarkeit des Innenraumes an verschiedene Cassettengrößen möglich ist.

Vorzugsweise ist zwischen dem Deckel und der jeweiligen Begrenzungswand innerhalb der gesamten jeweiligen äußeren Ausnehmung eine Einlegenische für mindestens eine Beschriftungskarte angeordnet. Diese Beschriftungskarte kann vor der Beschriftung bereits in der Einlegenische liegen und kann durch Herausschieben des Schiebers entnommen werden. Natürlich können auch getrennt Beschriftungskarten zur Verfügung gestellt werden. Jedenfalls sind die Beschriftungskarten nur lose eingelegt, durch den transparenten Schieber leicht einsehbar, ohne daß sie das Einschieben des Schiebers behindern.

Es können unterhalb eines Schiebers mehrere Einlegenischen nebeneinander angeordnet sein, wobei in Anpassung an die Beschriftungskarten die Ausnehmungen unterschiedlich tief ausgebildet sein können. Insbesondere kann mindestens eine Einlegenische so tief ausgebildet sein, daß mehrere Beschriftungskarten übereinander eingelegt werden können, was insbesondere dann von Vorteil ist, wenn vorbeschriftete Karten verwendet werden und dann die jeweils relevante Karte obenaufgelegt wird. An mindestens einer äußeren Begrenzungswand kann mindestens eine bewegliche Anzeigeeinrichtung angeordnet sein, wobei vorzugsweise diese bewegliche Anzeigeeinrichtung in einer Einbaunische angeordnet ist.

Durch die Verwendung von Schiebern wird ein einfaches und sicheres System geschaffen, mit dem eine vielseitig einsetzbare und sichere Beschriftung sowie eine Anpaßbarkeit des Innenraums an verschiedene Cassettengrößen möglich ist.

Vorzugsweise ist zwischen dem Schieber und der jeweiligen Begrenzungswand innerhalb der gesamten jeweiligen äußeren Ausnehmung eine Einlegenische für mindestens eine Beschriftungskarte angeordnet. Diese Beschriftungskarte kann vor der Beschriftung bereits in der Einlegenische liegen und kann durch Herausschieben des Schiebers entnommen werden. Natürlich können auch getrennt Beschriftungskarten zur Verfügung gestellt werden. Jedenfalls sind die Beschriftungskarten nur lose eingelegt, durch den transparenten Schieber leicht einsehbar, ohne daß sie das Einschieben des Schiebers behindern.

Es können unterhalb eines Schiebers mehrere Einlegenischen nebeneinander angeordnet sein, wobei in Anpassung an die Beschriftungskarten die Ausnehmungen unterschiedlich tief ausgebildet sein können. Insbesondere kann mindestens eine Einlegenische so tief ausgebildet sein, daß mehrere Beschriftungskarten übereinander eingelegt werden können, was insbesondere dann von Vorteil ist, wenn vorbeschriftete Karten verwendet werden und dann die jeweils relevante Karte obenaufgelegt wird. An mindestens einer äußeren Begrenzungswand kann mindestens eine bewegliche Anzeigeeinrichtung angeordnet sein, wobei vorzugsweise diese bewegliche Anzeigeeinrichtung in einer Einbaunische angeordnet ist.

Entsprechend einem Ausführungsbeispiel kann die Anzeigeeinrichtung aus einer Drehanzeigeeinrichtung bestehen, welche eine mit einem Handhabungsknopf versehene Drehscheibe umfaßt, die einerseits in der Bodenwand der Einbaunische und andererseits in einer in die Nische einrastbaren Klemmwand drehgelagert ist. Die einrastbare Klemmwand ermöglicht das einfache Einsetzen der Drehscheibe.

Vorteilhafterweise ist der Handhabungsknopf abnehmbar an einem Achsstummel befestigt, welcher mit der Außenseite der entsprechenden Begrenzungwand fluchtet. Somit kann eine gewünschte Einstellung mit dem Knopf, beispielsweise eine Grobeinstellung, vorgenommen und dann der Knopf so abgenommen werden, so daß ein unbeabsichtigtes Einwirken auf den Achsstummel und somit eine Verstellung verhindert werden kann. Möglicherweise ist an dieser Fläche eine zusätzliche Ausnehmung vorgesehen, in die der Knopf vorübergehend eingesetzt werden kann, bevor eine neue Verstellung erfolgen soll, beispielsweise wenn die in dem Behälter befindliche Cassette nicht voll-bespielt ist und zwischenzeitlich aber eine weitere Bespielung in einem bestimmten Umfang vorgenommen worden ist.

Zur Kennzeichnung der Drehstellung können in der Klemmplatte transparente Markierungsfelder und dahinter auf der Drehscheibe farbige Markierungsfelder angebracht sein.

Die inneren Ausnehmungen können vorzugsweise an jeweils einer voneinander gegenüberliegenden Begrenzungswänden angebracht sein, die an die zu öffnende Begrenzungswand des Behälters angrenzen. Diese Ausnehmungen können beispielsweise schwalbenschwanzartige Führungsausnehmungen sein, in die die genannten Einsätze einschiebbar sind. Vorzugsweise liegen diese Ausnehmungen einander gegenüber, so daß entweder Einsätze einseitig nur in eine Ausnehmung einschiebbar sind oder aber Einsätze, die mit einem ihrer Enden in jeweils eine der gegenüberliegenden Ausnehmungen einschiebbar sind. Wenn ein bestimmter Satz von Einsätzen in Abhängigkeit von den Cassettengrößen zur Verfügung steht, so kann auf einfache Weise der Innenraum des Behälters so verändert werden, daß mit festem Sitz und verschiebungsfrei unterschiedliche Cassettengrößen von ein und demselben Grundbehälter aufgenommen werden können.

Wenn der Behälter quaderförmig mit rechteckigem Grundriß ist, so können die Ausnehmungen in den schmalen Begrenzungswänden angeordnet sein. Wenn beispielsweise bei den unterschiedlich großen Cassetten die Dicke gleich ist und sich nur die Abmessungen in den beiden anderen Dimensionen ändern, kann eine dementsprechende Innenraumvergrößerung in eine der Richtungen oder in Kombination in beiden Richtungen vorgenommen werden.

Vorzugsweise ist die Ausnehmung in Richtung senkrecht zur Wandfläche der zugehörigen Begrenzungswand hinsichtlich ihrer Querschnittsgestaltung quer zur Einschubrichtung der Einsätze zweistufig ausgebildet, wobei mindestens ein Einsatz einen Vorsprung mit korrespondierender Querschnittsform hat. Dabei endet eine Querschnittsstufe der Ausnehmung vorzugsweise in einem bestimmten Abstand vor der geschlossenen, der zu öffnenden Begrenzungswand gegenüberliegenden Begrenzungswand.

Zweckmäßigerweise und zur staubsicheren Aufnahme der Cassetten ist der Behälter zweiteilig ausgebildet und besteht aus einem allseitig geschlossenen inneren Behälterteil und einem einseitig offenen äußeren Behälterteil. Eine Begrenzungswand des inneren Behälterteils ist öffenbar und die inneren Ausnehmungen sind an dem inneren Behälterteil und die äußeren Ausnehmungen mit den transparenten Schiebern an dem äußeren Behälterteil ausgebildet. Dadurch können trotz der Ausnehmungen die Wandstärken relativ klein gehalten werden.

Zum lösbaren Verbinden der beiden Behälterteile miteinander ist der innere Behälterteil mit mindestens einem an diesem ausgebildeten Rastelement in einem korrespondierenden Rastelement des äußeren Behälterteils lösbar eingerastet.

Vorzugsweise ist die öffenbare Begrenzungswand als Öffnungsschieber ausgebildet und zur besseren Handhabung mit einer Griffmulde versehen.

Vorzugsweise bestehen die Behälter aus Kunststoff. Es sind gegebenenfalls mehrere Behälter zu einer Einheit zusammengefaßt.

Weitere vorteilhafte Ausgestaltungen der Erfindung ergeben sich aus der nachfolgenden Beschreibung der in den Zeichnungen rein schematisch dargestellten Ausführungsbeispiele. Es zeigt

Fig. 1　eine Ansicht der vorderen Schmalseite eines Behälters zur Aufnahme einer Videocassette,

Fig. 2　eine der Fig. 1 entsprechende Ansicht eines Doppelbehälters,

Fig. 3　eine Seitenansicht der Behälter gemäß Fig. 1 und 2, wobei sich die Vorderseite links und die Hinterseite rechts in der Zeichnung befindet,

Fig. 4    einen Längsschnitt durch den vorderen Teil des
          Behälters gemäß Fig. 1 bis 3 in der Ebene IV-IV
          der Fig. 1,

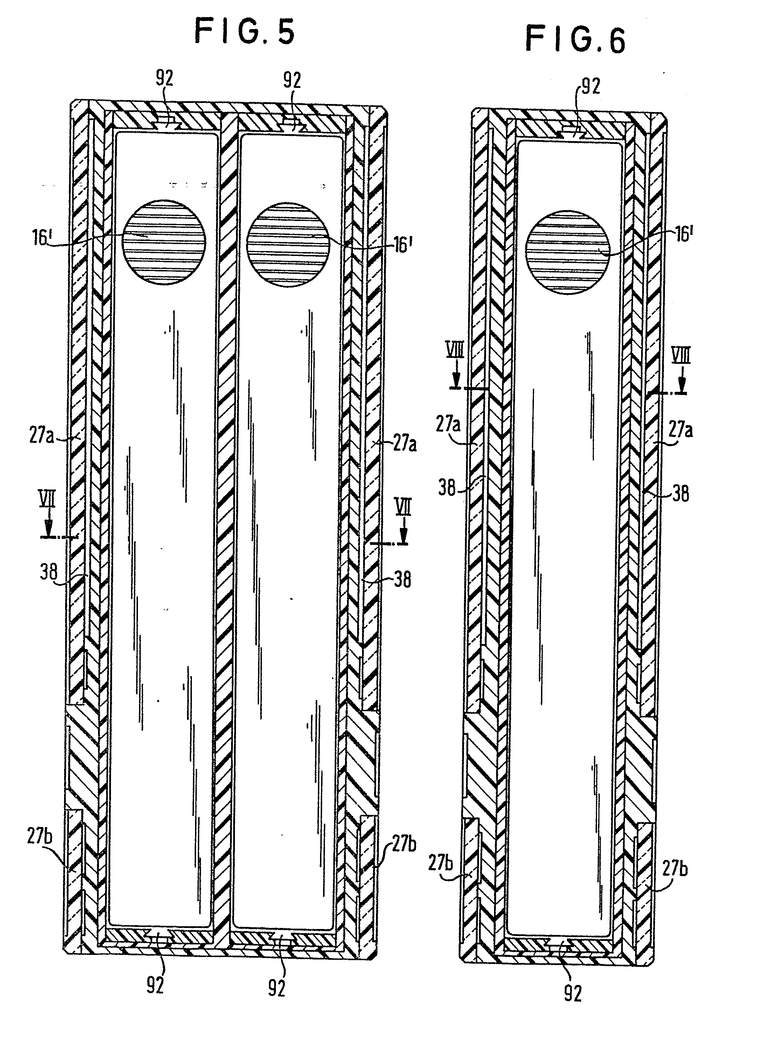

Fig. 5 und 6  einen Querschnitt durch den Behälter gemäß

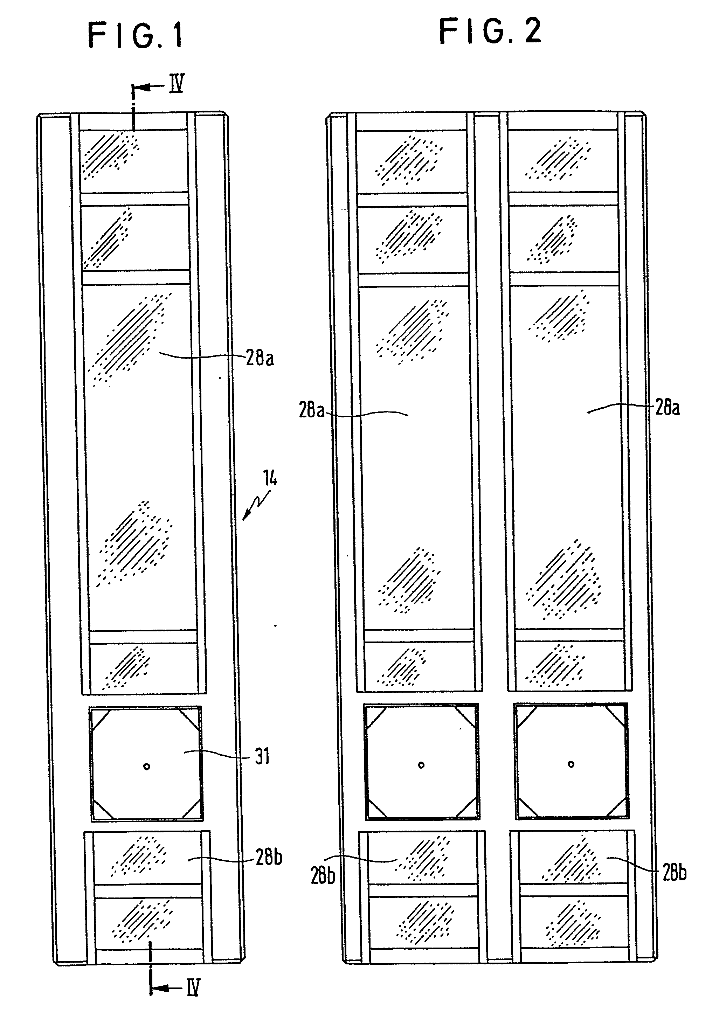

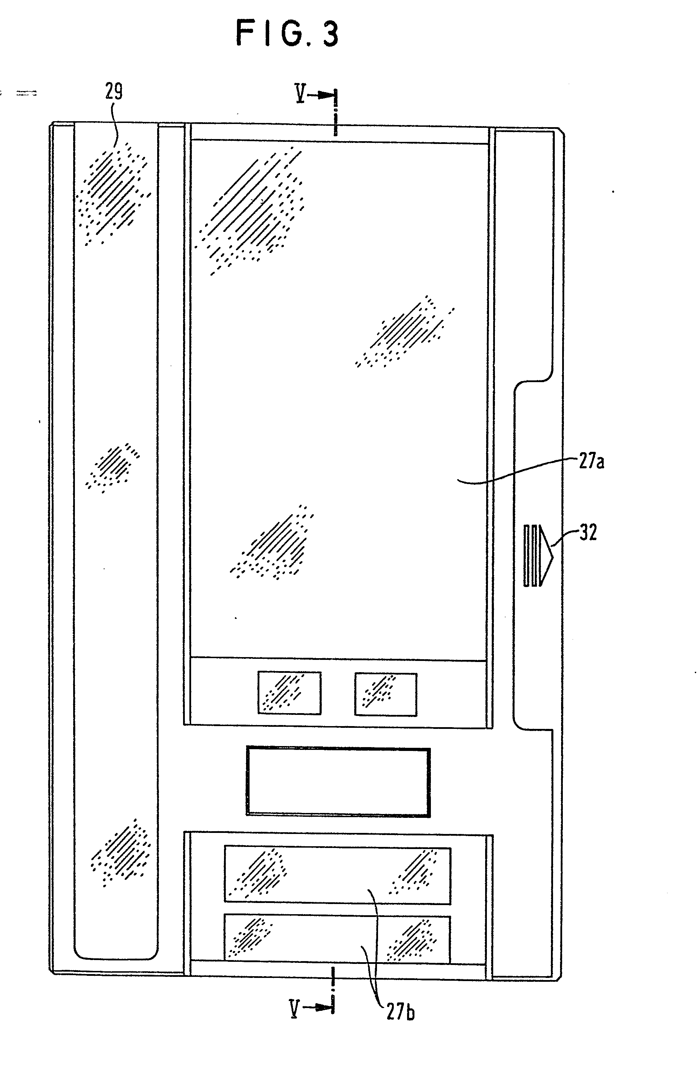

          Fig. 1 bis 4 in der Ebene V-V der Fig. 3 für den
          Doppelbehälter bzw. den Einzelbehälter,

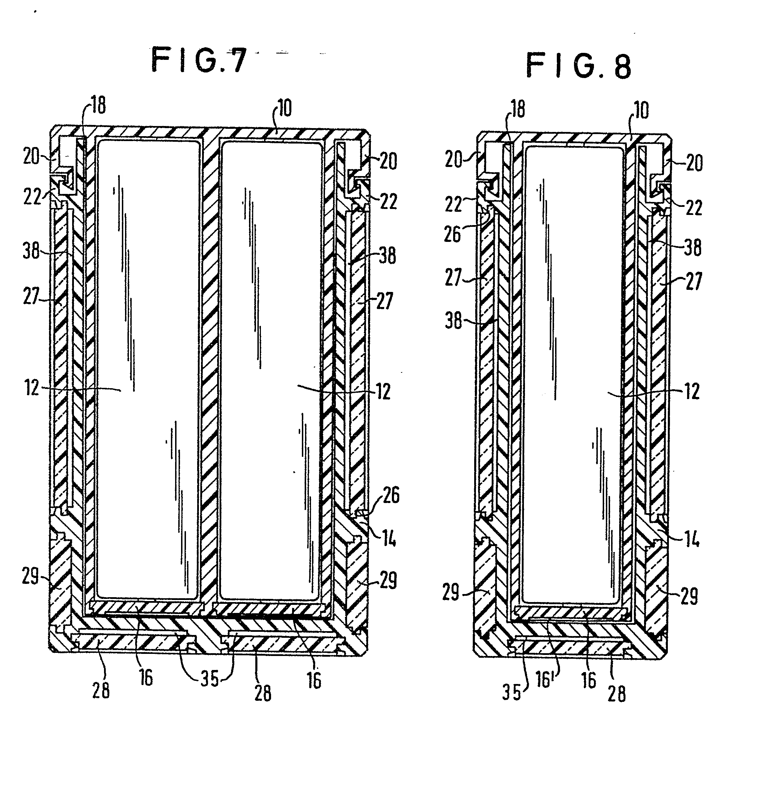

Fig. 7    einen Querschnitt des Behälters gemäß Fig. 1 bis
          6 in der Ebene VII-VII in Fig. 5,

Fig. 8    einen Querschnitt durch den Behälter entsprechend
          Fig. 1 bis 6 in der Ebene VIII-VIII in Fig. 6,

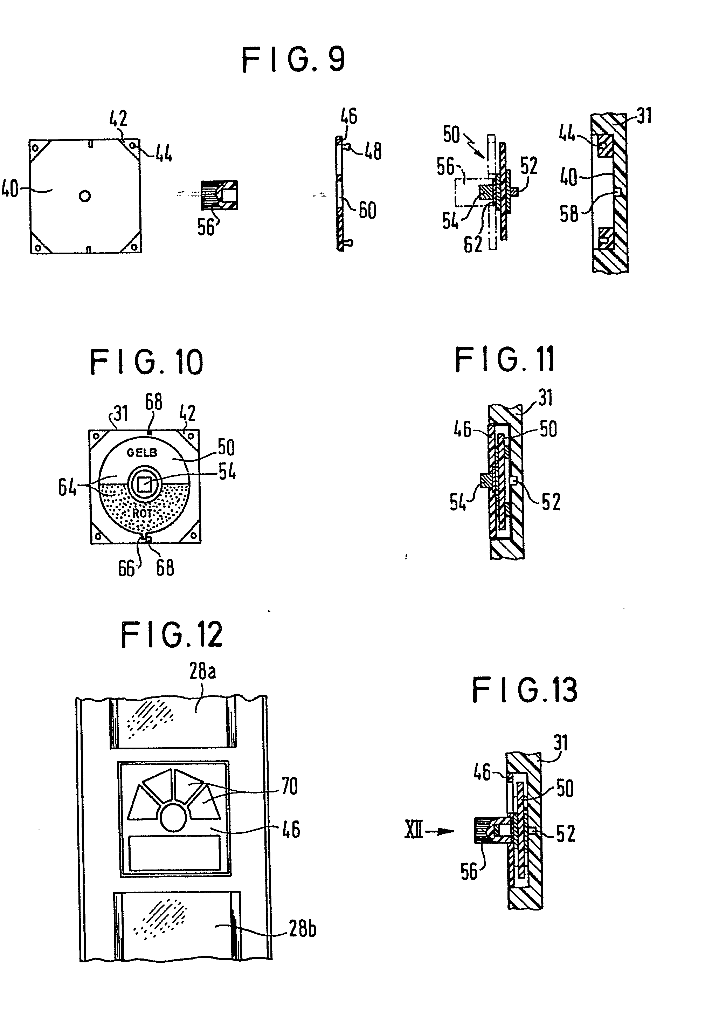

Fig. 9    eine Explosionsdarstellung der in Fig. 1 dargestellten Nische zusammen mit einer Drehanzeigeeinrichtung,

Fig. 10   eine Draufsicht auf die in Fig. 9 dargestellte
          Klemmwand mit einer Drehscheibe,

Fig. 11   die in Fig. 9 und 10 dargestellte Drehanzeigeeinrichtung im zusammengebauten und in die Nische
          eingebauten Zustand, jedoch ohne Drehknopf,

Fig. 12   eine Draufsicht auf die eingebaute Drehanzeigeeinrichtung,

Fig. 13   eine Querschnittsansicht der eingebauten Drehanzeigeeinrichtung mit aufgesetztem Drehknopf,

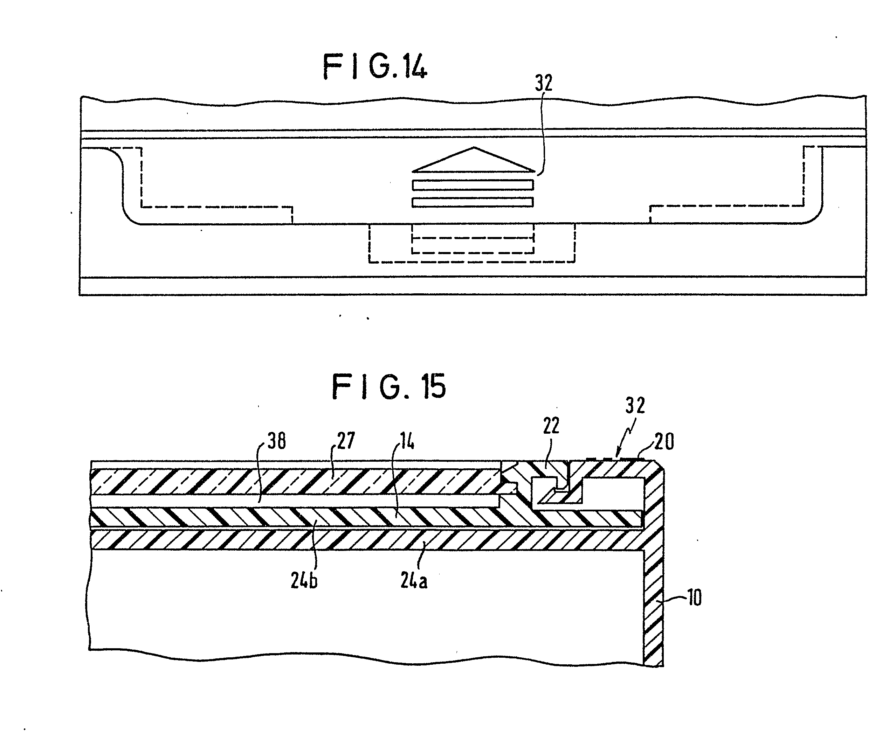

Fig. 14   eine Teilseitenansicht des hinteren Bereiches
          des Behälters,

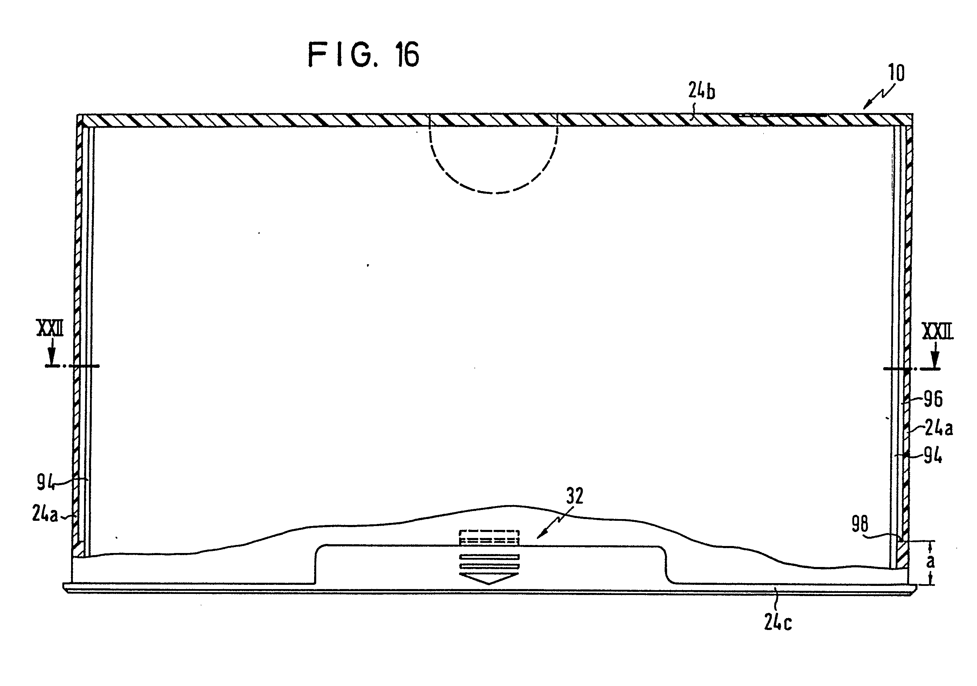

Fig. 15   eine Teilschnittansicht des Rasteingriffs der beiden Behälterteile im vergrößerten Maßstab,

Fig. 16    einen Längsschnitt durch den als "Innenlade"
           wirkenden inneren Behälterteil,

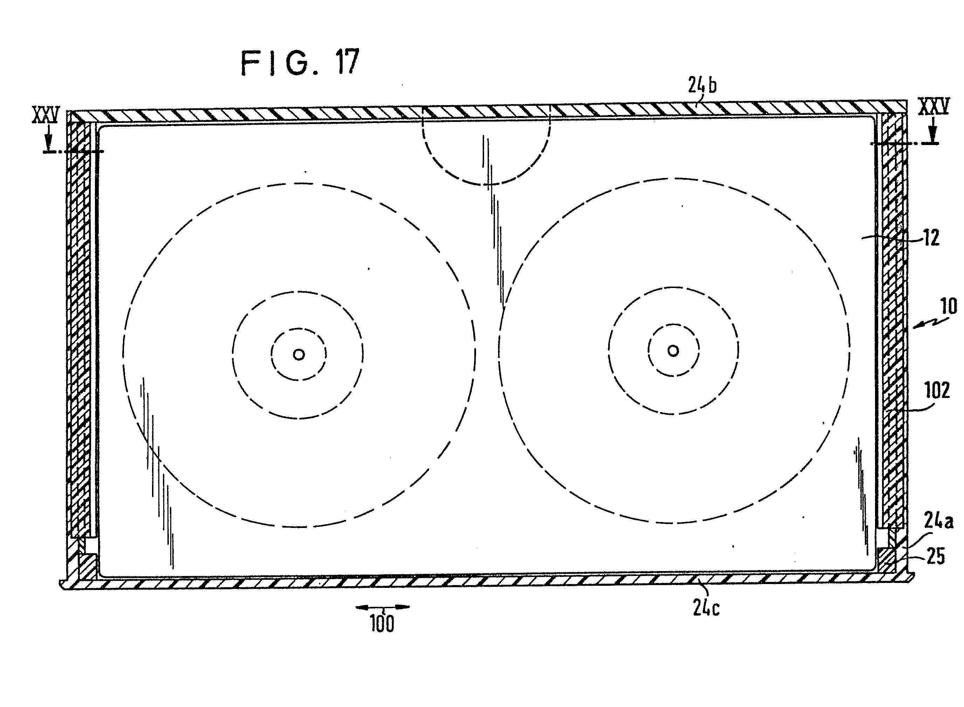

Fig. 17    einen Querschnitt durch den inneren Behälterteil
           in der Ebene XXII in Fig. 16 jeweils ohne die
           inneren Ausnehmungen eingesetzte Einsätze,

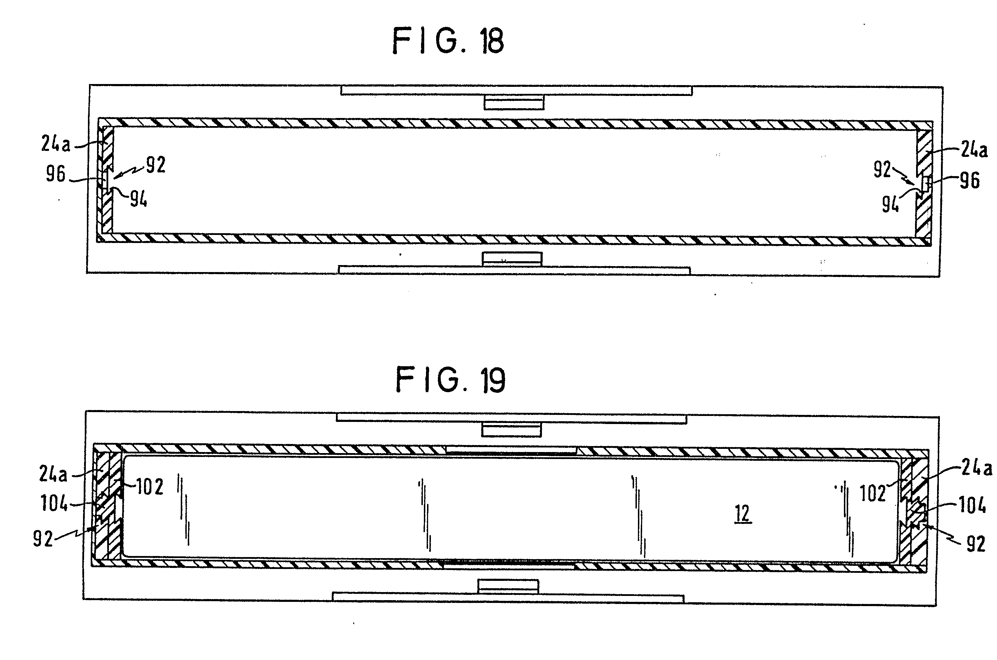

Fig. 18    einen Längsschnitt durch den als "Innenlade" wirkenden inneren Behälterteil mit davon aufgenommener Video-2000-Cassette und den diesbezüglich
           notwendigen Einsätzen,

Fig. 19    einen Querschnitt durch den Innenbehälter gemäß
           Fig. 18 in der Ebene XXV-XXV,

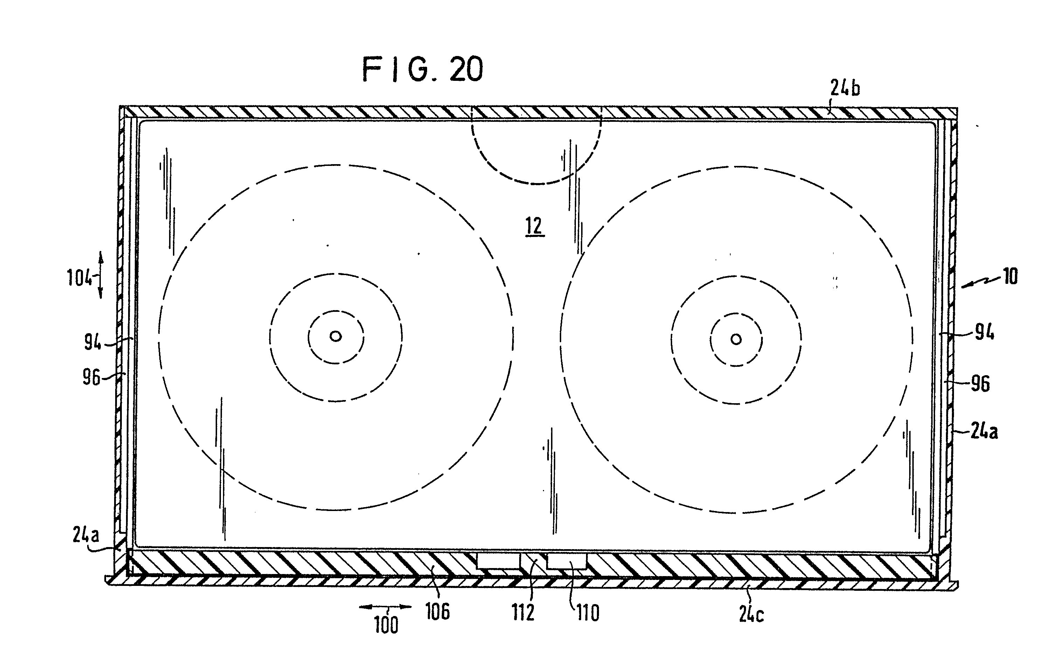

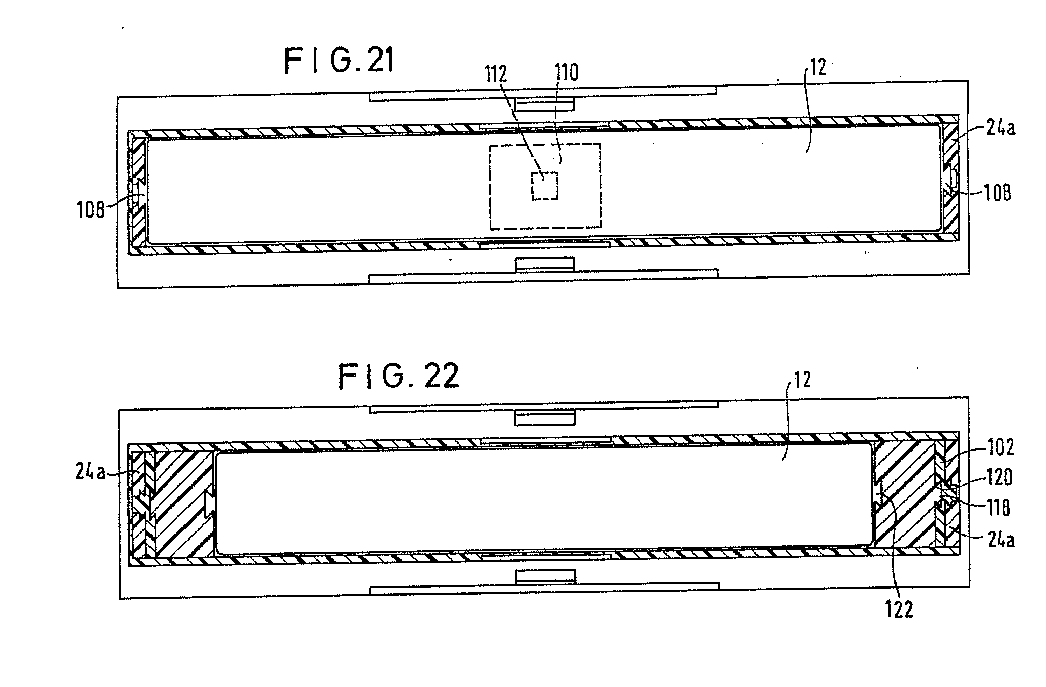

Fig. 20 und 21    entsprechende Darstellungen, jedoch im Zusammenhang mit einer VHS-Cassette,

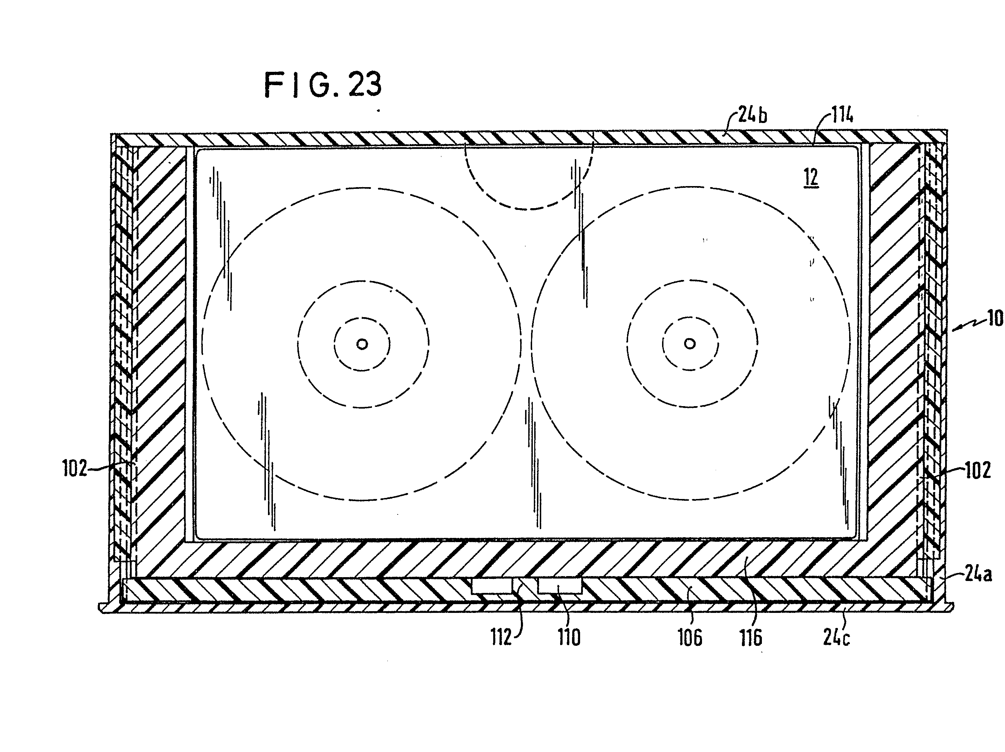

Fig. 22 und 23    Darstellungen entsprechend der Fig. 18 und
           19, jedoch im Zusammenhang mit der BETA-Max-
           Cassette,

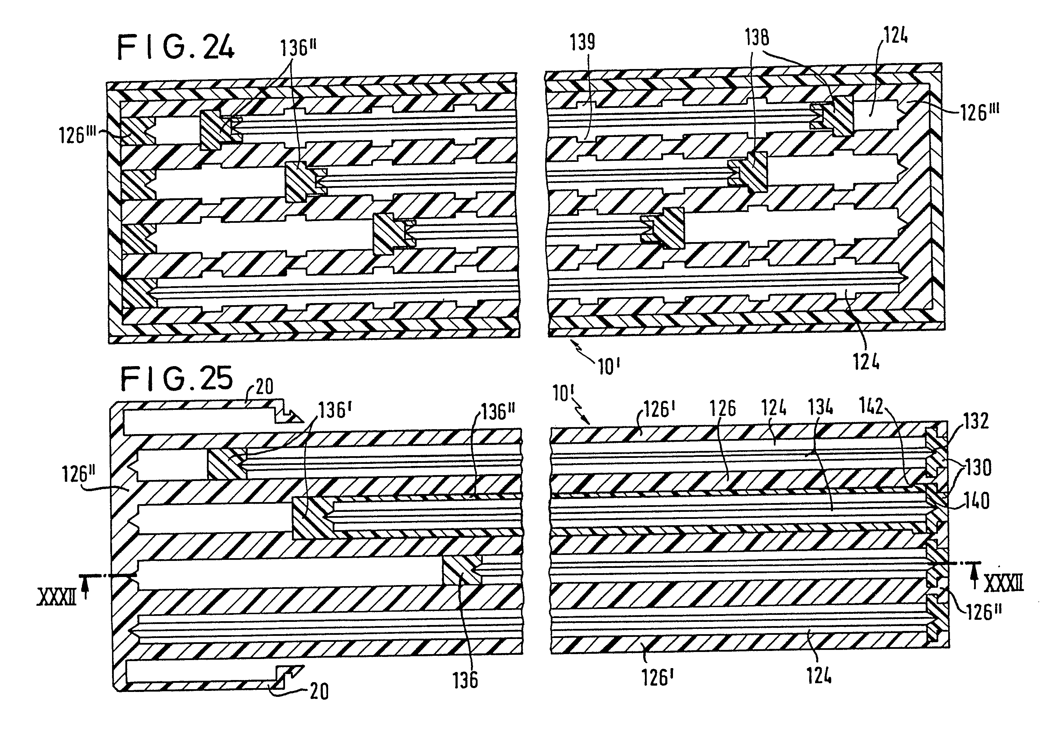

Fig. 24    einen Querschnitt durch einen Bildplattenbehälter
           mit darin befindlichen Bildplatten unterschiedlicher Größe,

Fig. 25    einen zum Querschnitt gemäß Fig. 24 senkrecht
           liegenden Querschnitt durch den Bildplattenbehälter gemäß Fig. 24,

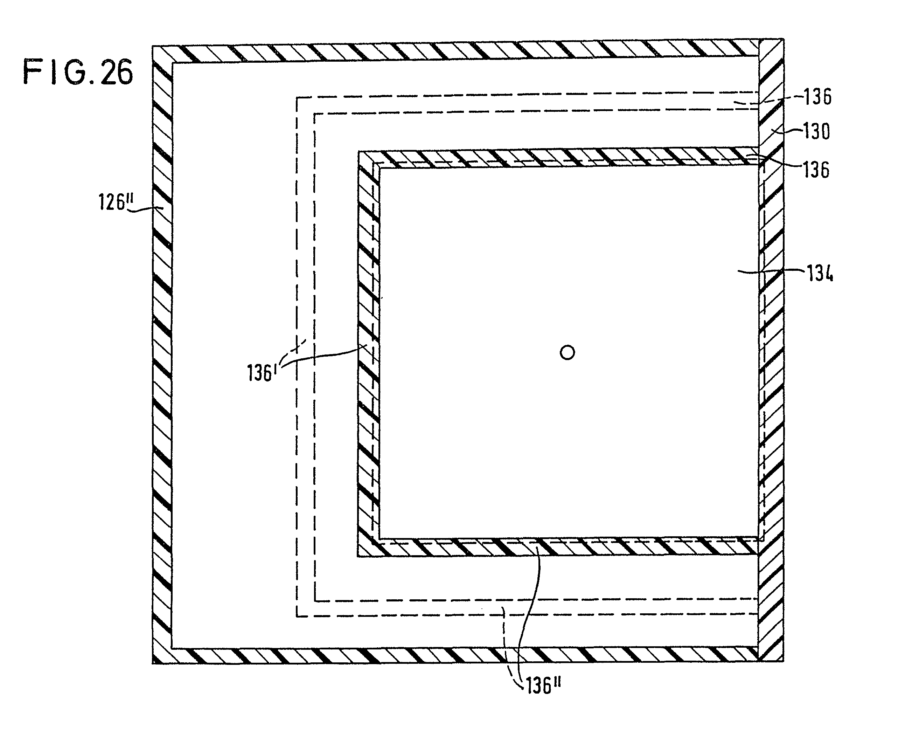

Fig. 26    einen Schnitt durch den Bildplattenbehälter ent-
           lang der Ebene XXXII-XXXII der Fig. 25 in kleineren Maßstab,

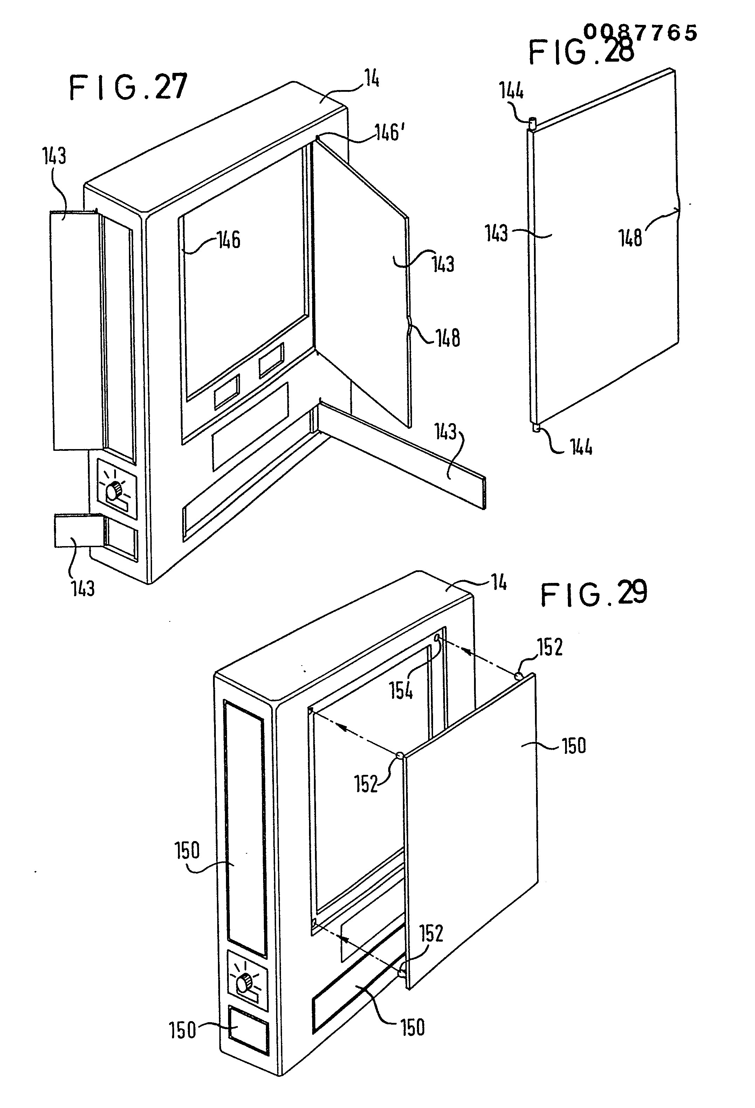

Fig. 27    eine schematische perspektivische Ansicht eines
           Einzelbehälters in kleinerem Maßstab, bei dem die
           Schieber durch angelenkte Türen ersetzt sind,

Fig. 28    eine perspektivische Tür gemäß Fig. 27 und

Fig. 29    eine explodierte perspektivische Ansicht eines
Einzelbehälters, bei dem der Schieber durch eine
Steckplatte ersetzt ist.

In den Zeichnungen ist sowohl ein Doppelbehälter als auch
ein Einfachbehälter dargestellt, wobei in der Beschreibung
nur auf den Einfachbehälter einzugehen ist, da der Doppelbehälter mit der Ausnahme gleich aufgebaut ist wie der
Einzelbehälter, daß natürlich die aneinergrenzenden Begrenzungswände der Doppelbehälter nicht mit Beschriftungen
oder anderen Funktionselementen versehen sein können.

Wie am besten aus Fig. 8 ersichtlich ist, besteht vorzugsweise, jedoch ohne zwingende Notwendigkeit, der gesamte Behälter aus zwei Behälterteilen, und zwar dem als Innenlade
wirkenden inneren Behälterteil 10 und dem äußeren Behälterteil 14. Innerhalb des inneren Behälterteils 10 befindet
sich die Videocassette 12. In Anpassung an die Form der jeweiligen Cassette weist der Behälter vier schmale Seitenbegrenzungswände auf. Eine der schmalen Begrenzungswände
ist als Schiebedeckel 16 ausgebildet. Der äußere Behälter
14 ist an der dem Schiebedeckel 16 entgegengesetzten Seite offen ausgebildet, was in Fig. 8 mit dem Bezugszeichen
18 gekennzeichnet ist.

Die Seite, wo sich der Schiebedeckel 16 des inneren Behälters befindet, ist die vordere Seite des Gesamtbehälters.
Dort wo sich die offene Seite 18 des äußeren Behälters befindet, in die der innere Behälter eingeschoben wird, ist
die hintere Seite des Gesamtbehälters. Die beiden Behälter
werden dadurch verrastet, daß an jeder Seite des inneren
Behälters jeweils eine Rastzunge 20 ausgebildet ist, die im
eingerasteten Zustand ein Teil der seitlichen Begrenzungswand des Gesamtbehälters bildet. Diese Rastzungen greifen
in entsprechende Rastzungen 22 des äußeren Behälterteils 14 ein. Die Rastzungen 20 sind so flexibel, daß sie auf Druck außer Eingriff mit den Rastzungen 22 bringbar sind, so daß der innere Behälterteil 10 aus dem äußeren Behälterteil 14 herausgezogen werden kann. Das Einsetzen und Herausnehmen der Videocassette erfolgt nach Beseitigen des Schiebedeckels 16, durch den der innere Behälterteil staubdicht verschlossen ist.

Der Übersichtlichkeit halber sind die Begrenzungswände nicht mit einem besonderen Bezugszeichen versehen, da ansonsten die Vielzahl der Bezugszeichen die Übersichtlichkeit behindert. In einigen besonderen Fällen werden im Zusammenhang mit den noch zu beschreibenden Ausnehmungen die Begrenzungswände mit dem Bezugszeichen 24 versehen.

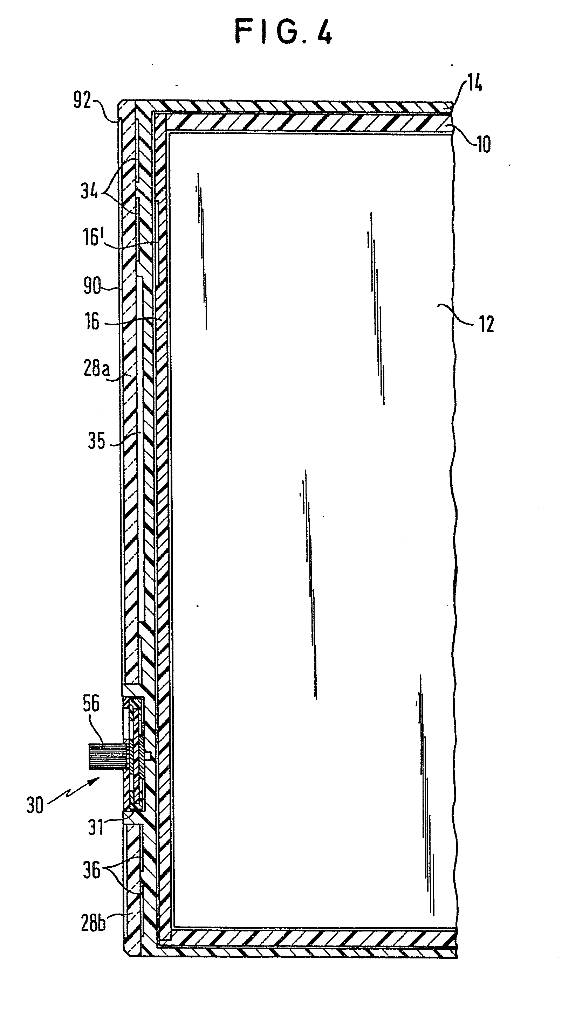

In den Begrenzungswänden des äußeren Behälterteils 14 sind äußere Ausnehmungen vorgesehen, die nur in Fig. 7 und 8 mit dem Bezugszeichen 26 versehen sind. In diese Ausnehmungen sind verschieden große transparente Schieber 27 und 28 eingeschoben. Diese Schieber sind in Fig. 7 und 8 im Schnitt dargestellt. Weitere Schieber in den großflächigen Begrenzungswänden des äußeren Behälters sind in Fig. 7 und 8 im Schnitt dargestellt. Diese sind mit dem Bezugszeichen 29 versehen. Diese Schieber werden später noch im einzelnen erläutert. Die Schieber 28 werden nachfolgend als vordere Schieber und die Schieber 27 als seitliche Schieber bezeichnet. Entsprechend der Darstellung in Fig. 4 sind im Schnitt zwei vordere Schieber 28a und 28b vorgesehen, zwischen denen sich eine als bewegliche Anzeigeeinrichtung ausgebildete Drehanzeigeeinrichtung 30 befindet. In dem ebenfalls in Fig. 4 dargestellten Schiebedeckel 16 befindet sich eine Griffmulde 16', die das Herausschieben des Schiebedeckels erleichtern soll.

Die seitlichen Schieber 27a und 27b sind in der Ansicht aus Fig. 3 ersichtlich. Ebenfalls ist dort in der Seitenansicht ein Drückgriff 32 zum Lösen des Rasteingriffes 20, 22 der beiden Behälterteile dargestellt. In Fig. 1 und 2 sind für den Einzelbehälter bzw. den Doppelbehälter die vorderen Schieber 28a und 28b nachgestellt. Ebenso ist aus diesen Figuren die Einlegenische für die noch zu beschreibende Drehzeigeeinrichtung 30 dargestellt.

Wie am besten aus Fig. 4 ersichtlich ist, befinden sich unter dem Schieber 28a Einlegenischen 34 und 35. Unter dem Schieber 28b befinden sich Einlegenischen 36. Die Einlegenischen sind in Anpassung an die jeweiligen Beschriftungsverhältnisse unterschiedlich groß ausgebildet. Dabei hat die Einlegenische 35 eine größere Tiefe als die Einlegenischen 34. Die Einlegenischen 36 haben wiederum eine größere Tiefe als die Nischen 34. Wenn die jeweiligen Schieber herausgezogen werden, so können Beschriftungskarten im vorbeschrifteten Zustand oder im noch zu beschriftenden Zustand in die Einlegenischen eingelegt werden. Danach wird der jeweilige Schieber in die Ausnehmungen eingeschoben, so daß die Beschriftungskarten einsehbar am Ort gehalten werden, ohne daß diese angeklebt werden müßten. Somit erhält das Äußere des Behälters ein gutes Aussehen im Zusammenhang mit hochqualitativen Funktionselementen. In den tieferen Einlegenischen können gegebenenfalls mehrere bereits vorbeschriftete Beschriftungskarten eingelegt werden, von denen dann die jeweils zu Verwendende ganz oben liegt und durch den transparenten Schieber eingesehen werden kann. Aus Fig. 5 und 6 sind jeweils für einen Doppelbehälter und einen Einfachbehälter die entsprechenden Verhältnisse für die seitlichen Schieber 27a und 27b dargestellt. Die entsprechenden Nischen 38 sind insbesondere deutlich aus Fig. 7 und 8 ersichtlich.

Nachfolgend soll nun anhand von Fig. 9 bis 13 die Drehanzeigeeinrichtung 30, wie sie im montierten Zustand der Fig. 4 entnehmbar ist, beschrieben werden.

In Fig. 9 ist die Einbaunische 31 als Teil der Begrenzungswand des äußeren Behälterteils 14 im Schnitt dargestellt. Der Boden 40 der Einbaunische ist in der Explosionsdarstellung ganz links dargestellt. In den Ecken der Einbaunische 31 befinden sich Ansätze 42, in denen Rastlöcher 44 untergebracht sind. An einer in der Mitte der Explosionsdarstellung wiedergegebenen Klemmplatte 46 befinden sich korrespondierende Rastvorsprünge 48. Weiterhin umfaßt die Drehanzeigeeinrichtung eine im ganzen als Drehscheibe 50 bezeichnetes Teil, welches mit zwei Achsstummeln 52 und 54 versehen ist. Auf den Achsstummel 54 ist ein Drehknopf 56 aufsteckbar. Im Boden 40 der Einbaunische 31 befindet sich ein Lagerloch 58.

Der Einbau der Drehanzeigeeinrichtung in die Einbaunische 31 wird folgendermaßen vorgenommen. Zunächst wird die Drehscheibe 50 so in die Einbaunische 31 eingesetzt, daß der einen runden Querschnitt aufweisende Achsstummel 52 in das Loch 58 eingreift. Sodann wird die Klemmplatte 46 mit einer Mittelöffnung 60 bündig auf einen Ansatz 62 der Drehscheibe aufgesetzt und dabei mit den Rastvorsprüngen 48 in die Rastausnehmungen 44 eingerastet. Auf den mit einem Vierkantquerschnitt versehenen Achsstummel 54 wird dann der Drehknopf 56 aufgesetzt.

Fig. 11 zeigt im Schnitt den Einbauzustand der Drehanzeigeeinrichtung mit abgenommenem Drehknopf 56. Fig. 13 zeigt diesen Einbauzustand in einer etwas anderen Schnittrichtung mit aufgesetztem Drehknopf 54.

Fig. 10 zeigt eine prinzipielle Ansicht auf die Einbaunische zusammen mit der Drehscheibe. Am Außenumfang der Drehscheibe, die in zwei Farbfeldern 64 unterteilt ist, befindet sich ein Anschlag 66. Dieser Anschlag ist im Rahmen einer 180° Drehung mit weiteren Anschlägen 68 in Eingriff bringbar, die an der Nischenwand befestigt sind.

Wie aus Fig. 12 ersichtlich ist, sind in der Abdeckplatte transparente Markierungsfenster 70 ausgebildet, durch die die Farbfelder 64 je nach Drehstellung der Drehscheibe 50 unterschiedlich sichtbar sind.

Der Achsstummel 54 kann, obwohl dies nicht dargestellt ist, bei abgenommenem Drehknopf 56 mit der Oberseite der Klemmplatte 46 fluchten, damit ein unbeabsichtigtes Verstellen nach Abnehmen des Knopfes nicht mehr möglich ist.

Im Zusammenhang damit kann die Drehanzeigeeinrichtung gemäß Fig. 9 bis 13 einer Grobanzeige dienen, aus der ersichtlich ist, in welchem Umfang die Cassette grob gesehen bespielt ist. Wenn sich diese Anzeige auf der Vorderseite befindet, so kann auf einen Blick hin eine erste Wertung des Cassettenzustandes vorgenommen werden.

Aus Fig. 14 und 15 ist der hintere Bereich des Behälters teilweise ersichtlich, und zwar hinsichtlich der verrastenden Verbindung der beiden Behälterteile. Aus Fig. 14 ist dabei in vergrößerter Darstellung der Drückgriff 32 ersichtlich. Aus Fig. 15 sieht man deutlich die beiden Rastzungen 20 und 22 und eine Begrenzungswand 24a des inneren Behälterteils 10 und eine Begrenzungswand 24b des äußeren Behälterteils 14.

Hinsichtlich der Schieber sei noch unter Hinweis auf Fig.4 erwähnt, daß diese mit einer Vertiefung 90 versehen sind, so daß sich an der Seite der Einschiebeöffnung eine Angriffskante 92 ergibt, an der der Schieber zum Herausziehen des Schiebers ergriffen werden kann.

Im Zusammenhang mit Fig. 16 bis 23 wird nunmehr der in diesen Zeichnungen dargestellte innere Behälterteil im Zusammenhang damit diskutiert, daß in das Innere dieses inneren Behälterteils Einsätze eingesetzt werden, um den Innenraum in Anpassung an die unterschiedlichen Größen von Cassetten anzupassen. Die Beschreibung ist rein beispielsweise auf drei derzeit auf dem Markt befindliche Videocassetten abgestellt. Die Ausgestaltung und Zuordnung der einzelnen Einsätze kann auch so vorgenommen werden, daß möglicherweise nur einseitig Einsätze eingesetzt werden.

Fig. 16 bis 17 zeigt den inneren Behälterteil ohne eine Cassette und ohne Einsätze. In den schmalen Begrenzungswänden 24a befinden sich Ausnehmungen 92, die hier eine Schwalbenschwanzform aufweisen. Die Ausnehmungen 92 verlaufen in Längsrichtung der schmalen Begrenzungswand 24a. Die Ausnehmung 92 ist zweistufig ausgebildet, wobei die erste Stufe 94 eine Trapezform und die zweite Stufe 96 eine rechteckige Querschnittsform.hat. Die beiden Stufen der Ausnehmung 92 sind in Fig. 16 mit unterschiedlichen Schraffuren dargestellt. Dabei ist ersichtlich, daß die erste Stufe 94 über die gesamte Länge der Begrenzungswand 24a verläuft. Es handelt sich dabei um die schmale Begrenzungswand, die an die öffenbare Begrenzungswand 24b angrenzt, welcher als Sicherheitsschieber den inneren Behälterteil 10 vollständig verschließt. Die zweite Stufe 96 der Ausnehmung 92 verläuft, wie ebenfalls aus Fig. 16 ersichtlich ist, nicht über die ganze Länge der Begrenzungswand 24a, sondern endet an einer Stelle 98 vor der schmalen Begrenzungswand 24c, welche parallel zur öffenbaren Begrenzungswand 24b liegt.

In Fig. 18 und 19 ist der innere Behälterteil zusammen mit einer eingelegten Cassette "Video-2000" dargestellt, welche die Abmessungen 183 x 110 x 26 mm hat. Die Länge in Doppelpfeilrichtung 100 des Innenraumes des inneren Behälterteils 10 ist in Anpassung an die Videocassette des Typs "VHS" (Fig. 20 und 21) zu.groß für die Cassette "Video-2000", so daß in beide Ausnehmungen 92 ein Einsatz 102 eingesetzt ist. Dieser Einsatz 102 begrenzt den Innenraum des inneren Behälterteils 10 in Richtung des Doppelpfeils 100 so, daß diese Länge an die entsprechende Länge der Cassette des Typs "Video-2000" angepaßt ist. Die Einsätze 102 sind mit einem Vorsprung 104 versehen, welcher als Rippe ausgebildet sein kann. Dieser Vorsprung hat eine Querschnittsform, welcher der zweistufigen Ausnehmung 92 entspricht. Dies ist deutlich aus der Querschnittsdarstellung in Fig. 19 ersichtlich. Dadurch, daß der Vorsprung auch den Querschnitt der zweiten Stufe ausfüllt, kann der Einsatz nicht bis zur Bodenbegrenzungswand 24c durchgeschoben werden, sondern verbleibt im Abstand zu dieser. Der Sinn und Zweck dessen wird später erläutert.

Entsprechend der Darstellung in Fig. 18 können die Begrenzungswände 24a im an die Begrenzungswand 24c angrenzenden Bereich Stege 25 angesetzt oder ausgeformt sein, auf denen die in Fig. 20 dargestellte VHS-Cassette aufliegen kann. Diese Stege ersetzen dann den Einsatz 106.

Fig. 20 und 21 zeigen den inneren Behälterteil 10 mit einer darin befindlichen Videocassette des Typs "VHS" mit den Dimensionen 188 x 104 x 25 mm. Die Innenraumdimension des inneren Behälterteils in Richtung des Doppelpfeils 100 ist auf diese Cassette abgestellt, so daß an die Begrenzungswände 24a keine Einsätze anzulegen sind. Jedoch hat diese Videocassette gegenüber der Cassette des Typs "Video-2000" eine kleinere Breitendimension in Richtung des Doppelpfeils 104. Daher ist in das Innere des Behälterteils ein Einsatz 106 eingeschoben, der sich an die zu öffenbare Begrenzungswand 24b parallele schmale Begrenzungswand 24c anlegt und dabei eine solche Wandstärke hat, daß die freie Dimension in Richtung des Doppelpfeiles 104 des inneren Behälterteils der entsprechenden Dimension der Cassette des Typs "VHS" angepaßt ist. Dieser Einsatz 106 ist mit Vorsprüngen oder Rippen 108 versehen, die lediglich die trapezförmige Querschnittsform der ersten Stufe 94 der Ausnehmung 92 haben. Daher kann der Einsatz 106 bis zur Begrenzungswand 24c eingeschoben werden. An der der öffenbaren Begrenzungswand 24b zugewandten Seite des Einsatzes 106 befindet sich eine Ausnehmung 110 mit einem Zapfen 112, die der Einsatzentnahme dienen sollen. Natürlich können auch andere Mittel vorgesehen sein, an denen der Einsatz erfaßt und aus dem inneren Behälterteil 10 entnommen werden. In Fig. 22 und 23 ist der innere Behälterteil mit einer darin befindlichen Videocassette des Typs "BETA-Max" dargestellt mit den Abmessungen 156 x 95 x 25 mm. Wie aus Fig. 22 und 23 hervorgeht, werden für diesen Cassettentyp die bereits im Zusammenhang mit den vorherigen Figuren und den vorher genannten Videocassettentypen verwendeten Einsätze 102 und 106 eingesetzt. Dies ist aus Fig. 22 und 23 deutlich ersichtlich. Dabei behindern sich nicht die Einsätze 102 und 106, da der Einsatz 102 durch die zweite Stufe der Ausnehmung 92 in dem genannten Abstand gehalten wird. Dadurch ergibt sich außerdem, daß die Einsätze stets mit der Öffnung 114 fluchten. Für die Cassette des Typs "BETA-Max" ist ein weiterer Einsatz 116 eingesetzt, welcher eine "U"-Form hat. Die beiden Schenkel des U legen sich dabei an die Einsätze 102 und der Steg dieses Einsatzes 116 legt sich an den Einsatz 106 an. In dem Einsatz 102 befindet sich eine trapezförmige Ausnehmung 118 und befindet sich auf der dem Vorsprung 104 entgegengesetzten Seite des Einsatzes 102. In dieser Ausnehmung 118 ist ein Vorsprung 120 des Einsatzes 116 eingeschoben. Schließlich befindet sich noch an der diesem Vorsprung 120 entgegengesetzten Seite des Schenkels des "U"-förmigen Einsatzes 116 eine ebenfalls vorzugsweise trapezförmige Ausnehmung 122 für das Einschieben eines möglichen weiteren Einsatzes.

Damit der in Fig. 4 dargestellte Drehknopf 56 als über die Begrenzungswand überstehendes Teil nicht bei der Handhabung während der Lagerung und des Transportes oder bei der Verpackung abbrechen kann, befindet sich in einem ausreichend wandstarken Einsatz, vorzugsweise in der an dem Sicherheitsschieber 16,24b angrenzenden Wand des "U"-förmigen Einsatzes 116 eine Ausnehmung zum losen Aufnehmen des Drehknopfes. Der Sicherheitsschieber verhindert vor der Nutzung des Behälters 5 ein Herausfallen des Drehknopfes.

In Fig. 24, 25 und 26 ist ein innerer Behälterteil dargestellt, welcher hinsichtlich seines funktionellen Aufbaus mit dem zuvor beschriebenen inneren Behälterteil identisch ist. Dieser innere Behälterteil dient jedoch im Gegensatz zu dem zuvor beschriebenen der Aufnahme von Bildplatten unterschiedlicher Größe.

Dabei stellt Fig. 25 einen Schnitt durch den inneren Behälterteil 10' dar, so daß an der rechten Seite der öffenbare Teil des inneren Behälterteils im Schnitt dargestellt ist.

Der gesamte innere Behälterteil ist beispielsweise in vier Fächer 124 aufgeteilt, die in Anpassung an die Bildplatten eine gestreckte rechteckige Querschnittsform haben. Die äußeren Fächer werden von je einer Trennwand 126 und einer äußeren Begrenzungswand 126' gebildet, wobei die inneren Fächer von jeweils zwei Trennwänden 126 gebildet werden. Die schmalen Begrenzungswände 126" schließen die Schmalseiten der Fächer 124 ab. Die öffenbare Seite der Fächer wird von in die schmale Begrenzungswand 126' des inneren Behälterteils 10' eingeschobene Sicherheitsschieber 130 gebildet. In diesen Sicherheitsschiebern befinden sich Kerben 132, in der der Umfangsrand der jeweiligen Bildplatte 134 zur Anlage kommt.

Fig. 24 zeigt einen zu Fig. 25 senkrechten Schnitt durch den inneren Behälterteil 10'. In beiden inneren Behälterteilen befinden sich unterschiedlich große Bildplatten. Wie gesagt, liegt der eine Umfangsrand der Bildplatte nahezu punktförmig an den Sicherheitsschiebern 132 an. Der diametral gegenüberliegende Umfangspunkt der größten Bildplatte 134 liegt an der gegenüberliegenden Begrenzungswand 126" an. Bei kleiner dimensionierten Bildplatten sind zwischen die Trennwände 126 bzw. einer solchen und der äußeren Begrenzungswand 126' "U"-förmige Einsätze 136 eingeschoben, wie dies insbesondere aus Fig. 26 ersichtlich ist. Diese "U"-förmigen Einsätze sind von den durch Sicherheitsschieber 130 geschlossene Öffnungen her einschiebbar und liegen im vollständig eingeschobenen Zustand mit Schultern 140 an Anschlägen 142 der Trennwände 126 an.

Es können aber auch Einzelschieber in rechten Winkeln zueinander eingeschoben werden.

Gemäß der Darstellung in Fig. 27 und 28 ist der zuvor beschriebene Schieber durch eine schwenkbare Tür 143 ersetzt. Wie aus Fig. 28 ersichtlich ist, weist die Tür zwei Schwenkzapfen 144 auf, mit denen die Tür in nicht dargestellte Schwenklagerausnehmungen eingerastet ist. Vorzugsweise befinden sich an zwei Seiten der Tür 143 Schattenfugen 146 und 146'. In die eine Schattenfuge 146' wird beispielsweise die Tür 143 mit ihren Schwenkzapfen 144 eingeführt und dann so ein 90°-Winkel zu dieser Einführbewegung durch Schlitze, die schmäler sind als die Querschnittsdicke der Schwenkzapfen, bewegt, daß die Schwenkzapfen eingerastet in den Schwenklagerausnehmungen zum Liegen kommen. Nach dieser Verschiebebewegung sind die sichtbaren Schattenfugen gleich breit. Es ist aber auch eine andere Lagermöglichkeit zu verwenden.

An der der angelenkten Seite der Tür gegenüberliegenden Seite befindet sich ein Rastvorsprung 148, mit dem die Tür in der Schließlage gehalten wird.

Schließlich kann anstatt eines Schiebers oder einer Tür auch eine Steckplatte 150 verwendet werden (Fig. 29), die vollständig vom Behälter lösbar ist. Sie besitzt an ihrer Abdeckfläche, die auf den Behälter weist, vorzugsweise viele Vorsprünge 152, die in entsprechende Sacklöcher 154, die sich in der entsprechenden Ausnehmung befinden, einrastbar sind.

In jedem Falle fluchten der Schieber, die Tür und die
Steckplatte in geschlossenem Zustand mit den Außenflächen
des Behälters.

Patentansprüche

1. Behälter zum Aufnehmen mindestens einer Cassette, insbesondere einer Videocassette, mit die Cassette vollständig umgebenden Begrenzungswänden, von denen zumindest eine öffenbar ist, und mit auf der Außenseite zumindest einer dieser Begrenzungswände aufgebrachten Beschriftungen, dadurch g e k e n n z e i c h n e t, daß an der Außenseite und/oder auch an der Innenseite zumindest einer Begrenzungswand (24) zumindest eine innere (92) bzw. äußere Ausnehmung (26) angeordnet ist, daß in der an der Außenseite vorgesehenen Ausnehmung (26) eine lose eingelegte Beschriftung abdeckender, transparenter Deckel (27,28,29,143; 150) und in der an der Innenseite vorgesehene Ausnehmung (92) Einsätze (102, 106) zur Veränderung der Innenraumabmessungen des Behälters (10) zumindest teilweise lösbar angeordnet sind.

2. Behälter nach Anspruch 1, dadurch g e k e n n z e i c h n e t , daß der Deckel als Schieber (27,28,29) ausgebildet ist.

3. Behälter nach Anspruch 1, dadurch g e k e n n - z e i c h n e t , daß der Deckel als Schwenktür (143) ausgebildet ist.

4. Behälter nach Anspruch 1, dadurch g e k e n n - z e i c h n e t , daß der Deckel als Steckplatte (150) ausgebildet ist.

5. Behälter nach Anspruch 1, dadurch g e k e n n ze i c h - n e t , daß zwischen dem Deckel und der jeweiligen Begrenzungswand (24) innerhalb der genannten jeweiligen äußeren Ausnehmung (26) eine Einlegenische (34,35,36,38) für mindestens eine Beschriftungskarte angeordnet ist.

6. Behälter nach Anspruch 5, dadurch g e k e n n - z e i c h n e t , daß nebeneinander mehrere Einlege- nischen (34,35,36) unterschiedlicher Tiefe vorgesehen sind.

7. Behälter nach mindestens einem der Ansprüche 1 bis 6, dadurch g e k e n n z e i c h n e t , daß in einer als Einbaunische (31) ausgebildeten äußeren Ausnehmung (26) mindestens eine bewegliche Anzeigeeinrichtung (30) angeordnet ist.

8. Behälter nach Anspruch 7, dadurch g e k e n n - z e i c h n e t , daß die bewegliche Anzeigeeinrichtung (30) eine Drehanzeigeeinrichtung ist.

9. Behälter nach Anspruch 8, dadurch g e k e n n - z e i c h n e t , daß die Drehzeigeeinrichtung trans- parente Markierungsfelder (70) und dahinter auf einer Drehscheibe (50) farbige Markierungsfelder (64) umfaßt.

10. Behälter nach Anspruch 1, dadurch g e k e n n - z e i c h n e t , daß die innere Ausnehmung (92) an jeweils einer von einander gegenüberliegenden Begrenzungswänden (24a) angebracht ist, die an die zu öffnende Begrenzungswand (24b) des Behälters (10) angrenzen.

11. Behälter nach Anspruch 10, dadurch g e k e n n - z e i c h n e t , daß die die inneren Ausnehmungen (92) aufweisenden Begrenzungswände (24a) die schmalen Begrenzungswände eines quaderförmigen Behälterkörpers mit rechteckigem Grundriß ist.

12. Behälter nach den Ansprüchen 10 und 11, dadurch g e - k e n n z e i c h n e t , daß die innere Ausnehmung (92) in Richtung senkrecht zur Wandfläche der zugehörigen Begrenzungswand (24a) hinsichtlich ihrer Querschnittsgestaltung senkrecht zur Einschubrichtung der Einsätze (102,106) zweistufig (94,96) ausgebildet ist, und daß mindestens ein Einsatz (102,106) einen Vorsprung (104; 108) mit korrespondierender Querschnittsform hat.

13. Behälter nach Anspruch 2, dadurch g e k e n n - z e i c h n e t , daß eine Querschnittsstufe (96) der inneren Ausnehmung (92) in einem bestimmten Abstand (a) vor der geschlossenen, der zu öffnenden Begrenzungswand (24b) gegenüberliegenden Begrenzungswand (24c) endet.

14. Behälter nach mindestens einem der Ansprüche 10 bis 13, dadurch g e k e n n z e i c h n e t , daß mindestens ein Einsatz (102; 116) mit einer Ausnehmung (118; 122) entsprechend der inneren Ausnehmung (92) versehen ist und an der entgegengesetzten Seite einen Vorsprung (104; 120) zum Einsetzen in eine entsprechende Ausnehmung (92; 118) aufweist.

15. Behälter nach Anspruch 1, dadurch g e k e n n z e i ch - n e t , daß in die inneren Ausnehmungen (92) Einsätze (102; 106; 116) einsetzbar sind, die zumindest an einer Begrenzungswand (24a; 24c) anliegen.

16. Behälter nach Anspruch 15, dadurch g e k e n n - z e i c h n e t , daß in die inneren Ausnehmungen Einsätze (116) einsetzbar sind, die an zumindest zwei aneinandergrenzenden Begrenzungswänden (24a,24c) anliegen, von denen eine (24c) parallel zur zu öffnenden Begrenzungswand (24b) liegt.

17. Behälter nach mindestens einem der Ansprüche 1 bis 16, dadurch g e k e n n z e i c h n e t , daß der Behälter zweigeteilt ausgebildet ist und aus einem allseitig geschlossenen inneren Behälterteil (10) und einem einseitig offenen äußeren Behälterteil (14) besteht, daß eine Begrenzungswand (24b) des inneren Behälterteils (10) öffenbar ist, daß die inneren Ausnehmungen (92) an dem inneren Behälterteil (10) und die äußeren Ausnehmungen (26) mit den transparenten Schiebern (27, 28,29) an dem äußeren Behälterteil (14) ausgebildet sind.

18. Behälter nach den Ansprüchen 1 bis 17, dadurch g e - k e n n z e i c h n e t , daß mindestens zwei Behälter als Einheit zusammengefaßt sind.

19. Behälter nach Anspruch 1, dadurch g e k e n n z e i ch- n e t , daß mindestens ein Fach (124) zum Aufnehmen einer Bildplatte (134) vorgesehen ist, daß in den Fachbegren- zungswänden (126,126') nebeneinanderliegend mehrere Aus- nehmungen (139) angeordnet sind, in die Stützeinsätze (136,138) für die Bildplatten (134) einsetzbar sind.

20. Behälter nach Anspruch 19, dadurch g e k e n n - z·e i c h n e t , daß in einer Begrenzungswand (126") nebeneinander in den einzelnen Fächern (134) als Schieber ausgebildete Stützeinsätze (130) angeordnet sind und daß parallel zu diesen Schiebern und senkrecht dazu wahlweise Stützeinsätze (136,138) einsetzbar sind.

21. Behälter nach Anspruch 19, dadurch g e k e n n - z e i c h n e t , daß von der Öffnungsseite der Fächer (124) verschieden große U-förmige Einsätze in hierfür bestimmte Nuten einsetzbar sind, wobei die offene Seite des "U" im eingesetzten und eingerasteten Zustand der Einsätze mit der Öffnung der Fächer zusammenfällt und zusammen mit dieser Öffnung durch einen Schieber (130) schließbar ist, wobei die Bildplatte an diesem Schieber (130) anliegt.

22. Behälter nach Anspruch 1, dadurch g e k e n n - z e i c h n e t , daß zumindest ein Einsatz, vorzugsweise der an der der Öffnung des Behälters (10) gegenüberliegende Einsatz (106) durch einen an die benachbarte Begrenzungswand (24a) angeformten Steg (25) ersetzt ist.

FIG.1

FIG.2

0087765

FIG.3

0087765

27a

32

29

27b

V

V

# FIG. 4

0087765

FIG.5

FIG.6

0087765

FIG.7

FIG.8

# FIG. 9

# FIG. 10

# FIG. 11

# FIG. 12

# FIG. 13

# FIG.14

# FIG. 15

# FIG. 16

0087765

# FIG. 17

24b

XXV    XXV

12

10

102

24a

25

24c

100

## FIG. 18

24a
96 92
94

24a
92 96
94

## FIG. 19

24a
102
104
92

24a
102
104
92

12

# FIG. 20

## FIG.21

## FIG.22

0087765

# FIG. 23

10

12

24b

114

102

102

112  110  106  116  24c

24a

0087765

FIG.24

FIG.25

FIG.26

FIG.28 0087765

FIG.27

FIG.29